# EUROPEAN PATENT SPECIFICATION

(11) **EP 2 483 055 B1**
(45) Date of publication and mention of the grant of the patent: **24.07.2013**
(21) Application number: 10763592.2
(22) Date of filing: 30.09.2010
(51) Int. Cl.: B29C 65/36, F16L 59/14, F16L 59/16, B29C 65/34, F16L 47/03

(54) **IMPROVED WATER-STOP METHOD IN SINGLE INSULATED PIPES**
Verbessertes Wasserstoppverfahren in einzelnen isolierten Leitungen
Procédé d'arrêt d'eau amélioré dans des tuyaux calorifugés simples

(30) Priority: 30.09.2009 EP 09012368
(43) Date of publication of application: 08.08.2012
(73) Proprietor: Logstor A/S, 9670 Løgstør (DK)
(72) Inventor: SCHACHT, Kim, DK-9600 Aars (DK)
(74) Representative: Zacco Denmark A/S
(86) International application number: PCT/DK2010/000129
(87) International publication number: WO 2012/041316

(56) References cited:
- EP-A1- 0 220 122
- EP-A1- 1 475 218
- EP-A1- 1 520 684
- EP-A2- 1 460 329
- US-A- 3 711 124

## Description

The invention relates to a pipe for transporting fluids such as oil or gas and a method for sealing an inner coating and a casing in a pipe for transporting fluids such as oil or gas. Such a pipe and a method are known from document EP-A-O 220 122.

### Background

Fluids such as oil and gas are often transported to or from offshore installations or from one coastal line to another through long continuous pipeline systems laid out below or on the seabed. The pipelines therefore naturally have to be able to sustain the very special conditions and extreme structural demands, which are not uncommon, combined with the environment being very corrosion aggressive. These conditions necessitate high demands on especially the tightness of the pipelines, which are normally constituted by a plurality of joined pipes.

Different types of pipelines are used for such offshore applications including simple single un-insulated pipes, pipe-in-pipe systems with or without insulation material between the pipes and pre-insulated composite pipelines. The type of pipeline system depends among others on the fluid to be transported and on the sea depths from where it is to be transported, as the pressure increases at lower sea depths. In applications of transporting oil, the oil is very often mixed with some gasses and water resulting in methane hydrates forming in the mixture. If the pipelines are not sufficiently thermally insulated, the cooled methane hydrates solidify on the pipe walls eventually clogging the pipeline. In order to avoid this, additives such as methanol and glycols are added to the oil/gas mixture which then, however, are to be boiled off at the receiving station and returned for reuse. Thermally insulated pipelines are also often necessary as the viscosity of some crude oils is too high to be pumped if the temperature of the oil becomes too low.

Thermally insulated pipes may comprise one or more inner carrier pipes of metal with a coating, an insulation layer such as polyurethane foam and a casing pipe of polymer. A common problem with these pipelines is that imperfection in the insulated pipes and/or in the joining of these leads to crack formation allowing seawater to diffuse in between the layers of the insulated pipes. This reduces the insulation capability, enhances the possibility of corrosion and can further make the pumping of high viscosity oils very difficult if not impossible.

The costs associated with production stop and repairing of pipelines are huge, and the risk of damaging the pipeline on repair as a whole is great. Therefore, single insulated pipes wherein the thermal insulation layer is confined inside by a casing and closed at both ends are preferably used. If seawater has diffused into the thermal insulation layer on a single pipe, it is likely that the drop in fluid temperature along this single pipe will only have a minor effect on the overall fluid temperature. Hence, it does not prevent functionality of the entire pipeline, and the costly process of replacing and/or repairing the pipeline can be avoided. Even if repair of the pipeline is necessary, the costs of the process are significantly lower as only the single pipe and not the entire pipeline needs to be replaced.

One example of the single insulated pipes used today comprises a fusion bonded epoxy coating layer and/or a polyethylene (PE) coating layer on the steel pipe (inner carrier pipe), a thermal insulation layer and a PE casing. At the ends of the steel pipe, the thermal insulation layer is sealed in by the joining of the casing and the coating by using e.g. mastic, which functions as glue or a double sided tape.

Using mastic as the joining material provides a good and effective sealing at limited fluid temperatures. However, oil drilled from subsoil with temperatures of up to 140°C has been observed. When mastic and PE are exposed to such temperatures, they change state, whereby the sealing between the layers delaminates allowing for seawater to diffuse into the insulation layer. As a consequence, sealing in the insulation layer by use of mastic cannot be used when drilling subsoil with high temperatures.

### Description of the invention

Disclosed herein is a pipe for transporting fluids such as oil or gas, said pipe comprising an inner carrier pipe with an inner coating and a casing. The inner coating and said casing are sealed by integration between the material of the inner coating and wherein said pipe comprises melting means placed in between said inner coating and said casing, said melting means being an electrically conductive means with an electrical resistance having melted and thereby integrated said materials by generating heat based on a current through said means.

Hereby a strong sealing between the casing and the inner coating is obtained, which allows for an effective encapsulation of e.g. insulation material placed in between the casing and the inner coating. The strong sealing of the two layers is advantageous compared to different types of glue previously used to seal the two layers, as the integration of the two materials forms a stronger sealing compared to glue sealing. This is in particular relevant when a pipeline comprising pipes according to the above is laid out below or on the seabed, where it has to be able to sustain the very special conditions from the surroundings, where external pressure of 20 bars or more is not uncommon combined with the environment being very corrosion aggressive. Further, it is highly advantageous to use an integration of the casing and the inner coating as it allows for transportation of e.g. subsoil with temperatures of up to 140°C, as delamination between the layers does not occur with this type of sealing as opposed to a glue-based sealing of the layers. It is thereby avoided that seawater will diffuse into an insulation layer placed in between the casing and the inner coating thereby destroying the insulation properties.

In an embodiment said electrically conductive means is a welding band. By using a welding band, it is possible to create a wide welding belt thereby creating a strong and effective sealing. Further, in one or more embodiments said welding band is in a lattice shape, which allows for a good heat distribution in the entire belt into the three-layer inner coating and the casing, yielding an effective welding.

In an embodiment said electrically conductive means is a string allowing for the generation of a narrow welding belt. This is advantageous if the pipes are small in size, and/or the integration area is narrow therefore not allowing for positioning of a wider welding band. The string could in an embodiment be twisted around the pipe a number of times to simulate a welding band.

Not within the scope of this invention it is to change the molecular state by a chemical material. This chemical material will typically be applied onto either the inner coating and/or the casing depending on how the latter is attached to the pipe. The chemical material may need to be activated before the integration process is initiated, or might start the integration process spontaneously when put in contact with the material of the casing and/or the three-layer inner coating. The activation can include exposure to light from e.g. a laser, heat or similar, which changes the structure and/or the internal energetic state of the chemical material thereby possibly starting a radical reaction.

In an embodiment the material of said inner coating and/or said casing is polypropylene. Polypropylene is preferred as a sealed interface between two layers of polypropylene can withstand the high temperatures inside the pipe, when said pipe is used to transport e.g. subsoil and at the same time withstand the low temperatures of the sea when put on or below the seabed. Alternatively, the material of said inner coating and/or said casing is polyethylene, which provides similar advantages as polypropylene.

Disclosed herein is also a method for sealing an inner coating and a casing in a pipe for transporting fluids such as oil or gas. The inner coating and said casing are sealed by integrating the material of the inner coating and the material of the casing by melting, wherein said melting is obtained by generating heat based on a current through an electrical conductor positioned between said inner coating and said casing in the area which is to be integrated.

Hereby a strong sealing between the casing and the inner coating is obtained, which allows for an effective encapsulation of e.g. insulation material placed in between the casing and the inner coating. The strong sealing of the two layers is preferable over different types of glue previously used to seal the two layers, as the integration of the two materials forms a stronger sealing compared to glue sealing. This is in particular relevant when a pipeline comprising pipes according to the above is laid out below or on the seabed, where it has to be able to sustain the very special conditions from the surroundings, where external pressure of 20 bars or more is not uncommon combined with the environment being very corrosion aggressive. Further, it is highly advantageous to use an integration of the casing and the inner coating as it allows for transportation of e.g. crude oil with temperatures of up to 140°C, as delamination between the layers does not occur with this type of sealing as opposed to a glue-based sealing of the layers. It is thereby avoided, that seawater will diffuse into an insulation layer placed in between the casing and the inner coating thereby destroying the insulation properties.

In one or more embodiments said method further comprises heating an inner carrier pipe placed underneath said inner coating to a desired temperature.

The heating of the inner carrier pipe is advantageous, since it is hereby avoided that the steel absorbs all the heat in the integration process. Welding of the inner coating and the casing would e.g. be nearly impossible without heating of the inner pipe, as the inner coating would not be properly heated at the same time as the casing would start to melt.

In one or more embodiments said heating of said inner carrier pipe is performed by induction. It is hereby possible to effectively heat the inner carrier pipe without heating the casing.

Not within the scope of the invention it is to change themolecular state by a chemical material. This chemical material will typically be applied onto either the inner coating and/or the casing depending on how the latter is attached to the pipe. The chemical material may need to be activated before the integration process is initiated, or might start the integration process spontaneously when put in contact with the material of the casing and/or the three-layer inner coating. The activation can include exposure to light from e.g. a laser, heat or similar, which changes the structure and/or the internal energetic state of the chemical material thereby possibly starting a radical reaction.

### Brief description of the drawings

Figures 1a, b, and c illustrate a different angle view of a single pipe according to the invention, wherein an insulation layer is confined in between a casing layer and an inner coating layer by use of a welding method.
Figure 2 illustrates a close up of a welding band.

### Description of embodiments

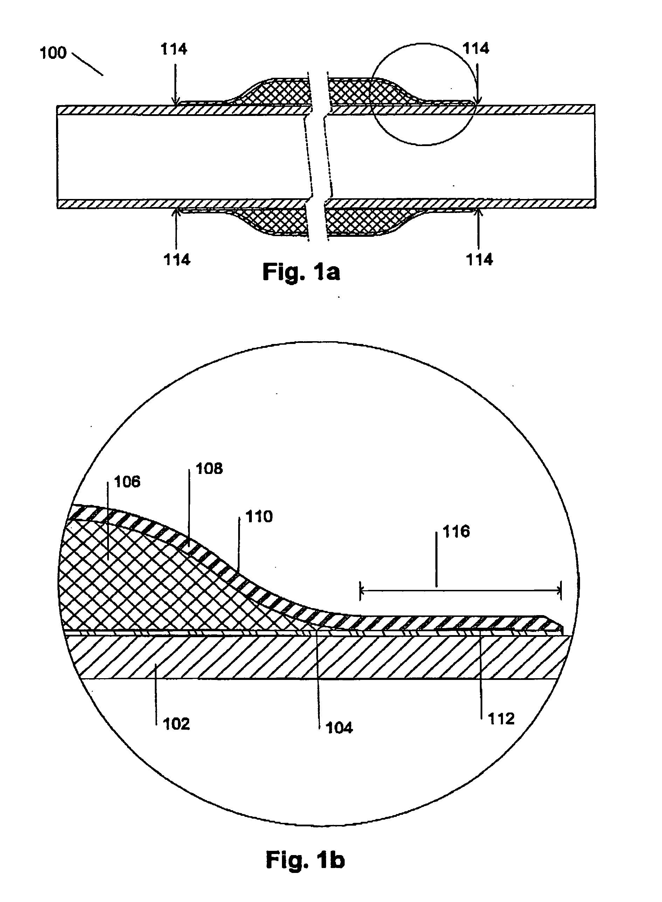

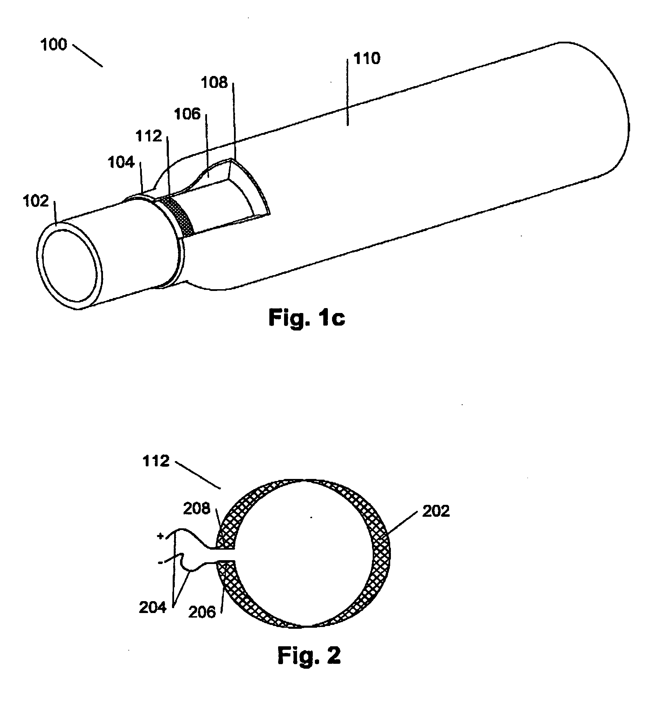

In figure 1a, an embodiment of a single insulated pipe 100 according to the invention is shown in a longitudinal cross sectional view. Figure 1b shows the close up of the pipe 100 marked with the circle in the cross sectional view in figure 1a, and figure 1c illustrates the pipe 100 in an isometric view.

The pipe 100 comprises an inner carrier pipe 102 of metal, normally steel, with a three-layer inner coating 104. The three-layer inner coating 104 comprises a thin epoxy layer placed directly on the outside of the inner carrier pipe 102 in order to protect against corrosion, a polypropylene (PP) based layer, and a layer of glue which keeps the epoxy and the PP based layers held together. As an alternative to using the PP-based material in the three-layer coating, polyethylene (PE) based materials or other polymeric materials can also be used.

The pipe 100 also comprises a thermal insulation layer 106, which is normally polyurethane foam, but can also consist of one or more layers of solid or partly foamed thermoset or thermoplastic polymers. On the outer part of the pipe 100, a casing 108 with a thin outer layer of rough coating 110 is present. Both the casing 108 and the rough coating 110 is normally of a PP-based material. The rough coating 110 consists of very small pieces of material applied to the casing 108 in order to provide the pipe 100 with a rough surface to increase friction when handled, e.g. lifted and/or turned around, during the assembly and/or insertion into the water.

At the end 114 of the three-layer inner coating 104, the thermal insulation layer 106 is tapered thereby creating an assembly face for joining the three-layer inner coating 104 and the casing 108. This provides an effective sealing of the insulation layer 106.

In this embodiment of the invention, a welding band 112 is arranged in between the three-layer inner coating 104 and the casing 108 in their assembly face. When current is applied through the welding band it initiates a change of the molecular state of the casing 108 and the three-layer inner coating 104 materials, thereby effectively sealing the insulation layer 106 in between the casing 108 and the three-layer inner coating 104. As an alternative to using a welding band 112, one or more single welding strings could also be used. This would facilitate a narrower welding belt. Welding strings could also be twisted around the pipe where the number of twists influences the width of the welding belt.

As yet another alternative, not within the scope of the claims, a chemical material could be used to integrate the casing 108 and the three-layer inner coating 104. This chemical material could be applied onto either the three-layer inner coating 104 and/or the casing 108 depending on how the latter is attached to the pipe 100. The chemical material may need to be activated before the integration process is initiated, or might start the integration process spontaneously when put in contact with the material of the casing 108 and/or the three-layer inner coating 104. The activation can include exposure to light from e.g. a laser, heat or similar, which changes the structure and/or the internal energetic state of the chemical material thereby possibly starting a radical reaction.

In one embodiment of the invention, the pipe 100 has the dimensions displayed in the table below. However, other thicknesses and diameters of the layers can be used as well.

| | |
|---|---|
| Inner carrier pipe; outer diameter x thickness | ∅ 273 x 23,8 mm |
| Three-layer coating; thickness | 3,5 mm |
| Insulation layer; outer diameter x thickness | ∅ 420 x 62,5 mm |
| Casing; thickness | 8 mm |

Figure 2 shows one embodiment of a welding band 112 which can be used in the welding of the three-layer inner coating and the casing. The welding band 112 comprises a lattice 202 with a typical width of 40 mm, which can also be both wider and narrower. The welding band 112 further comprises two welding wires 204 extending from the ends 206, 208 of the welding band 112. Both the lattice 202 and the welding wires 204 are normally of iron or steel, but copper (Cu) or another metal with good conductivity properties could also be used.

In the assembly face, first the three-layer inner coating 104 and secondly the thermal insulation layer 106 are applied around the inner carrier pipe 102 followed by assembling of two welding bands 112 - one at each end of the pipe 100 on the sections 116 of the three-layer inner coating 104 without a thermal insulation layer 106. Prior to assembling the welding band 112, the three-layer inner coating 104 is grinded to ensure a clean and rough surface, which more effectively melts during the welding process as compared to a smooth surface. The welding band 112 is typically an open ring, which is closed at the ends 206, 208 upon assembly. After the casing 108 has been applied on top of the thermal insulation layer 106 and the three-layer inner coating 104 with the welding band 112, the welding wires 204 are cut free in order to expose them to a current.

The different layers applied onto the pipe 100, e.g. the three-layer inner coating 104 and the casing 108, can be applied in a process where the pipe 100 is slowly rotated around its longitudinal axis at the same time as it is moved forward, whereby it passes the tool from which e.g. the three-layer inner coating 104 or casing 108 is extruded. Alternatively, e.g. the casing 108 can be in the shape of an outer pipe, which is first pulled over the insulation layer 106 and thereafter shrunk yielding a tight fit.

Previously attempts to weld casing and coating layers together have shown to be quite difficult, if not impossible, as the inner carrier pipe has absorbed all the heat with the consequence that the casing is heated to severely allowing it to melt while the coating remains inadequately heated.

According to this invention, the inner carrier pipe 102 is therefore pre-heated by the use of e.g. an induction coil prior to the welding of the three-layer inner coating 104 and the casing 108. This prevents the situation from previously, where the inner carrier pipe 102 would absorb all the heat in the welding process. Along with heating of the inner carrier pipe 102, the temperature of the welding band 112 is continuously measured. When the desired temperature is reached, heating of the inner carrier pipe 102 is stopped, e.g. by turning off the induction coil, and the three-layer inner coating 104 and the casing 108 are subsequently welded together by applying a current to the welding wire 112. A hose clamp (not shown in the drawing) is normally used to press the casing 108 around the inner carrier pipe 102 during the welding process. Due to the lattice structure of the welding band 112, there is a good heat distribution into the three-layer inner coating 104 and the casing 108, yielding an effective welding.

After welding the three-layer inner coating 104 and the casing 108, the inner carrier pipe 102 is cut free at the ends 114 as marked in figure 1a with the arrows.

Given the extreme conditions on or below the seabed, welding is advantageous as it creates a stronger joining than mastic between the casing 108 and the three-layer inner coating 104. Thus, by welding the casing 108 and the three-layer inner coating 104 together, the joining can withstand temperatures of up to 140°C without changing structure, which allows the pipes to be used for drilling up crude oil with high temperatures. Diffusion of sea water into the insulation layer 106 is thereby effectively avoided.

**References**

| | |
|---|---|
| 100 | Pipe |
| 102 | Inner carrier pipe |
| 104 | Three-layer inner coating |
| 106 | Thermal insulation layer |
| 108 | Casing |
| 110 | Thin outer coating |
| 112 | Welding wire |
| 114 | The ends of the pipe, where it is cut free |
| 116 | Section of the three-layer coating without the insulation layer |
| | |
| 202 | Lattice structure |
| 204 | Welding wire |
| 206 | First end of the welding wire |
| 208 | Second end of the welding wire |

## Claims

1. A pipe (100) for transporting fluids such as oil or gas, said pipe comprising an inner carrier pipe (102) with an inner coating (104) on the outer surface of the inner carrier pipe (102) and a casing (108), wherein said inner coating (104) and said casing (108) are sealed by integration between the material of the inner coating and of the casing, **characterised in that** said pipe comprises melting means (112) placed in between said inner coating (104) and said casing (108), said melting means being an electrically conductive means with an electrical resistance having melted said materials by generating heat based on a current through said means.

2. A pipe according to claim 1, wherein said electrically conductive means (112) is a welding band.

3. A pipe according to claim 2, wherein said welding band is in a lattice shape.

4. A pipe according to claim 1-3, wherein said electrically conductive means (112) is a string.

5. A pipe according to claim 1-4, wherein the material of said inner coating (104) and/or said casing (108) is polypropylene.

6. A pipe according to claim 1-4, wherein the material of said inner coating (104) and/or said casing (108) is polyethylene.

7. A method for sealing an inner coating (104) and a casing (108) in a pipe (100) for transporting fluids such as oil or gas, **characterised in that** said inner coating (104) and said casing (108) are sealed by integrating the material of the inner coating and the material of the casing by melting, wherein said melting is obtained by generating heat based on a current through an electrical conductor (112) positioned between said inner coating (104) and sad casing (108) in the area which is to be integrated.

8. A method according to claim 7, wherein said method further comprises heating an inner carrier pipe (102) placed underneath said inner coating (104) to a desired temperature.

9. A method according to claim 8, wherein said heating of said inner carrier pipe (102) is performed by induction.

## Patentansprüche

1. Rohr (100) zum Fördern von Fluids wie etwa Öl oder Gas, wobei das Rohr ein inneres Trägerrohr (102) mit einer Innenbeschichtung (104) auf der äußeren Oberfläche des inneren Trägerrohrs (102) und einem Gehäuse (108) umfasst, wobei die Innenbeschichtung (104) und das Gehäuse (108) durch Verflechtung zwischen dem Material der Innenbeschichtung und des Gehäuses abgedichtet sind,
**dadurch gekennzeichnet, dass** das Rohr ein zwischen der Innenbeschichtung (104) und dem Gehäuse (108) angeordnetes Schmelzmittel (112) umfasst, wobei das Schmelzmittel (112) ein elektrisch leitendes Mittel mit einem elektrischen Widerstand ist, wobei die Materialien durch Erzeugung von Wärme basierend auf einem Strom durch das Mittel geschmolzen sind.

2. Rohr nach Anspruch 1, wobei das elektrisch leitende Mittel (112) ein Verschweißungsband ist.

3. Rohr nach Anspruch 2, wobei das Verschweißungsband in Form eines Gitters ist.

4. Rohr nach den Ansprüchen 1-3, wobei das elektrisch leitende Mittel (112) ein Strang ist.

5. Rohr nach den Ansprüchen 1-4, wobei das Material der Innenbeschichtung (104) und/oder des Gehäuses (108) Polypropylen ist.

6. Rohr nach den Ansprüchen 1-4, wobei das Material der Innenbeschichtung (104) und/oder des Gehäuses (108) Polyethylen ist.

7. Verfahren zum Abdichten einer Innenbeschichtung (104) und eines Gehäuses (108) in einem Rohr (100) zum Fördern von Fluids wie etwa Öl oder Gas, **dadurch gekennzeichnet, dass** die Innenbeschichtung (104) und das Gehäuse (108) durch Verflechtung des Materials der Innenbeschichtung und des Materials des Gehäuses mittels des Schmelzens abgedichtet werden, wobei das Schmelzen durch Erzeugung von Wärme basierend auf einem Strom durch einen elektrischen Leiter (112) erzielt wird, der zwischen der Innenbeschichtung (104) und dem Gehäuse (108) in dem zu verflechtenden Bereich angeordnet ist.

8. Verfahren nach Anspruch 7, wobei das Verfahren zusätzlich ein Erhitzen eines inneren unterhalb der Innenbeschichtung (104) angeordneten Trägerrohrs (102) auf eine gewünschte Temperatur umfasst.

9. Verfahren nach Anspruch 8, wobei das Erhitzen des inneren Trägerrohrs (102) durch Induktion durchgeführt wird.

## Revendications

1. Tuyau (100) pour le transport de fluides tels que le pétrole ou le gaz, ledit tuyau comprenant un tuyau de support intérieur (102) avec un revêtement intérieur (104) sur la surface extérieure du tuyau de support intérieur (102) et un boîtier (108), ledit revêtement intérieur (104) et ledit boîtier (108) étant scellés par l'intégration entre le matériau du revêtement intérieur et du boîtier, **caractérisé en ce que** ledit tuyau comprend des moyens de fusion (112) arrangés entre ledit revêtement intérieur (104) et ledit boîtier (108), lesdits moyens de fusion (112) étant un moyen électriquement conducteur avec une résistance électrique ayant fondu desdits matériaux par génération de chaleur sur la base d'un courant à travers lesdits moyens.

2. Tuyau selon la revendication 1, dans lequel ledit moyen électriquement conducteur (112) est une bande de soudage.

3. Tuyau selon la revendication 2, dans lequel ladite bande de soudage est en forme de treillis.

4. Tuyau selon les revendications 1 à 3, dans lequel ledit moyen électriquement conducteur (112) est un cordon.

5. Tuyau selon les revendications 1 à 4, dans lequel le matériau dudit revêtement intérieur (104) et/ou dudit boîtier (108) est du polypropylène.

6. Tuyau selon les revendications 1 à 4, dans lequel le matériau dudit revêtement intérieur (104) et/ou ledit boîtier (108) est du polyéthylène.

7. Procédé pour sceller un revêtement intérieur (104) et un boîtier (108) dans un tuyau (100) pour le transport de fluides tels que le pétrole ou le gaz, **caractérisé en ce que** ledit revêtement intérieur (104) et ledit boîtier (108) sont scellés par l'intégration du matériau du revêtement intérieur et du matériau du boîtier par fusion, ladite fusion étant obtenue par la génération de chaleur sur la base d'un courant à travers un conducteur électrique (112) positionné entre ledit revêtement intérieur (104) et ledit boîtier (108) dans la zone à intégrer.

8. Procédé selon la revendication 7, dans lequel ledit procédé comprend en outre le chauffage d'un tuyau de support intérieur (102) placé au-dessous dudit revêtement intérieur (104) à une température voulue.

9. Procédé selon la revendication 8, dans lequel ledit chauffage dudit tuyau de support intérieur (102) est réalisé par induction.
